(19) Europäisches Patentamt
European Patent Office
Office européen des brevets

(11) EP 2 264 552 A1

(12) DEMANDE DE BREVET EUROPEEN

(43) Date de publication:
22.12.2010 Bulletin 2010/51

(51) Int Cl.:
*G04B 17/22* (2006.01)    *F16F 1/04* (2006.01)

(21) Numéro de dépôt: 09163283.6

(22) Date de dépôt: 19.06.2009

(84) Etats contractants désignés:
AT BE BG CH CY CZ DE DK EE ES FI FR GB GR
HR HU IE IS IT LI LT LU LV MC MK MT NL NO PL
PT RO SE SI SK TR

(71) Demandeur: Nivarox-FAR S.A.
CH-2400 Le Locle (CH)

(72) Inventeurs:
• Charbon, Christian
2054, Chézard-St-Martin (CH)

• Verardo, Marco
2336, Les Bois (CH)
• Quintina, Jose
2400, Le Locle (CH)

(74) Mandataire: Couillard, Yann Luc Raymond et al
ICB
Ingénieurs Conseils en Brevets SA
Faubourg de l'Hôpital 3
2001 Neuchâtel (CH)

(54) **Ressort thermocompensé et son procédé de fabrication**

(57)    L'invention se rapporte à un procédé de fabrication (1) d'un ressort pour une pièce d'horlogerie comportant les étapes suivantes :

a) former (3) une barre en un premier matériau métallique;

b) former (5) un tube en un deuxième matériau métallique;

c) enfileur (7) la barre dans le tube ;

d) solidariser (13) la barre dans le tube :

e) diminuer (15) la section de l'ensemble barre -tubé

f) enrouler (21) l'ensemble barre - tube afin de former ledit ressort

L'invention se rapporte également au ressort obtenu par le procédé.

L'invention concerne le domaine des organes régulateurs de pièces d'horlogerie.

Fig. 1

EP 2 264 552 A1

**Description**

Domaine de l'invention

L'invention se rapporte à un ressort pour balancier - spiral et plus particulièrement un tel ressort dont le coefficient thermo-élastîque est sensiblement nul.

Arrière plan de l'invention

Il est connu, pour un mouvement mécanique d'horlogerie, de rechercher un écart de marche le plus faible possible, Cependant, il est très difficile d'y arriver en raison notamment de la sensibilité de l'ensemble balancier - spiral aux variations de température.

Le document EP 1 039 352 divulgue un ressort-spiral en alliage particulier dont la surface externe comporte un revêtement d'oxyde. Le document divulgue un ressort-spiral qui est thermocompensé c'est-à-dire que, notamment, son coefficient thermo-élastique, également appelé coefficient thermique du module d'Young, reste sensiblement proche de zéro. Cependant, le ressort est très difficile à mettre en oeuvre ce qui occasionne un taux de rebus et un prix de revient qui sont très élevés,

Résumé de l'invention

Le but de la présente invention est de pallier tout ou partie les inconvénients cités précédemment en proposant un ressort thermocompensé pour balancier - spiral dont la mise en oeuvre est simplifiée.

A cet effet, !'invention se rapporte à un ressort thermocompensé pour balancier - spiral comportant une section comprenant un premier matériau métallique amagnétique **caractérisé en ce que** la section comporte, sur toute la longueur du ressort, une couche externe comportant un deuxième matériau métallique amagnétique dont le coefficient thermo-élastique varie dans le sens opposé à celui du premier. Avantageusement, le premier matériau est un acier inoxydable et le deuxième matériau est un alliage FeMn ou inversement.

L'invention se rapporte également à une pièce d'horlogerie comportant au moins un ressort conforme à l'une des variantes précédentes.

Enfin, l'invention se rapporte à un procédé de fabrication d'un ressort pour une pièce d'horlogerie comportant les étapes suivantes :

  a) former une barre en un premier matériau métallique;
  b) former un tube en un deuxième matériau métallique
  c) enfiler la barre dans le tube ;
  d) solidariser la barre dans le tube ;
  e) diminuer la section de l'ensemble barre - tube
  f) enrouler l'ensemble barre - tube afin de former ledit ressort.

On comprend donc que le ressort peut être obtenu avec des matériaux largement commercialisés de manière très simple et à l'aide d'étapes mécaniques maîtrisées qui autorisent un très faible taux de rébus.

Conformément à d'autres caractéristiques avantageuses de invention ;

  - le procédé comporte, entre l'étape e) et f), j'étape g): modifier la section circulaire de l'ensemble barre - tube en section polygonale ;
  - le procédé comporte, après l'étape f), l'étape h) : surélever la spire externe dudit ressort afin de former un ressort du type Breguet ;
  - le procédé comporte l'étape i) : effectuer un enlèvement de matière au niveau du tube après la formation du ressort afin d'ajuster le coefficient thermo-êlastîque de l'ensemble barre - tube ;
  - le procédé comporte l'étape finale j) : effectuer un traitement thermique afin d'ajuster le coefficient thermo-élastique de l'ensemble barre - tube ;
  - le procédé comporte, entre les étapes b) et c), une étape de traitement thermique de la barre et/ou du tube afin d'augmenter les espaces entre ces derniers dans le but de faciliter ladite étape c) ;
  - les étapes d) et e) sont réalisées en même temps par un processus de déformation à froid et/ou à chaud ;
  - la section externe du tube lors de l'étape b) est comprise entre 5 et 100 mm ;
  - la section externe de l'ensemble barre - tube à la fin de l'étape e) est comprise entre 10 $\mu$n et 1 mm ;
  - les premier et deuxième matériaux sont amagnétiques et dont les coefficients thermo-élastiques varient en sens opposé :
  - les matériaux sont formés respectivement par un acier inoxydable et un alliage FeMn.

Description sommaire des dessins

D'autres particularités et avantages ressortiront clairement de la description qui en est faite ci-après, à titre indicatif et nullement limitatif, en référence à runique figure représentant un schéma fonctionnel d'un procédé de fabrication d'un ressort selon l'invention.

Description détaillée des modes de réalisation préférés

L'invention se rapporte à un ressort thermocompensé pour un organe régulateur de pièce d'horlogerie du type balancier - spiral. Le ressort selon l'invention utilise des matériaux susceptibles d'être travaillés par des méthodes classiques de mises en forme de métaux. De plus, les matériaux utilisés sont usuels et donc bon marché.

Selon l'invention, le coefficient thermo-élastique du ressort est rendu sensiblement nul par l'utilisation de deux matériaux métalliques amagnétiques en recouvrement sur toute sa longueur dont les coefficients thermo-élastiques respectifs varient en sens opposé afin de se compenser. On comprend donc que si un des matériaux possède un coefficient thermo-élastique positif, le deuxième en possèdera un négatif.

De manière parfaitement équivalente, le matériau à coefficient thermo-élastique positif peut recouvrir l'autre ou inversement. Seule l'épaisseur en recouvrement est à adapter en fonction de celle recouverte et, également, en fonction du type de balancier afin de globalement compenser l'organe régulateur balancer - spiral.

Préférentiellement, le ressort utilise le couple de matériaux acier inoxydable - alliage FeMn. Ainsi, le matériau en recouvrant de l'autre n'a pas d'importance. Cependant, de manière préférée, l'âme utilise l'alliage FeMn et, la couche externe, !'acier, afin de limiter l'oxydation dudit ressort.

Afin de calculer les épaisseurs respectives de l'âme (matériau 1) par rapport à la couche externe (matériau 2), on calcule le coefficient thermoélastique corrigé *CTE'* souhaité et éventuellement, le couple corrigé *C'* souhaité pour son adaptation avec un balancier selon les relations suivantes où les coefficients de dilatation sont jugés équivalent :

$$CTE' = \frac{A \cdot E_1 \cdot CTE_1 + B \cdot E_2 \cdot CTE_2}{A \cdot E_1 + B \cdot E_2} \qquad (1)$$

$$C' = \frac{(A \cdot E_1 + B \cdot E_2) \cdot (h + 2d) \cdot (e + 2d)^3}{12L} \qquad (2)$$

Où :

$$A = \frac{h \cdot e^3}{(e + 2d)^3 \cdot (h + 2d)} \qquad (3)$$

$$B = \frac{h \cdot \left[(e + 2d)^3 - e^3\right] + 2d \cdot (e + 2d)^3}{(e + 2d)^3 \cdot (h + 2d)} \qquad (4)$$

Et :

- $E_x$ est le module d'Young du matériau x ;
- $CTE_x$ est le coefficient thermo-élastique du matériau x ;
- $e$ est l'épaisseur de l'âme ;
- $h$ est la hauteur de l'âme ;
- $d$ est l'épaisseur de la couche externe.

Bien entendu, l'invention ne saurait se limiter au couple acier inoxydable - alliage FeMn. Ainsi, il peut, notamment, être envisagé d'autres couples. A titre d'exemple, la couche externe peut comporter de l'acier inoxydable et/ou du chrome et/ou du nickel et/ou du fer. De même, à titre d'exemple, l'âme du ressort peut comporter du niobium, de ramage NbZr, de l'alliage CrMn, de l'alliage FeMn ou de ramage AuPd.

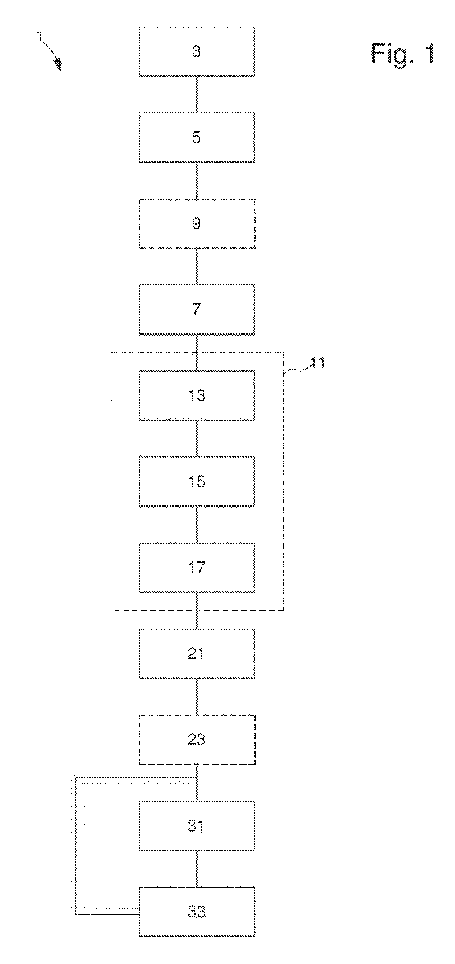

Le procédé de fabrication 1 du ressort ci-dessus va maintenant être expliqué en référence à la figure 1. Dans une première étape 3 du procédé 1, une barre d'un premier matériau est formée. Dans une deuxième étape 5 du procédé 1 qui peut être effectuée en para!lé!e, avant ou après l'étape 3, un tube d'un deuxième matériau est formé. Puis dans une troisième étape 7, la barre est enfilée dans le tube. Préférentiellement, la différence de section entre l'extérieure de la barre et le creux du tube est la plus petite possible afin de limiter leurs déplacements relatifs.

Ainsi afin de faciliter l'exécution de l'étape 7, de manière préférée, une étape optionnelle 9, avant l'étape 7, est prévue. L'étape 9 consiste à effectuer un traitement thermique de la barre et/ou du tube afin de garantir un espace c'est-à-dire une différence de section entre ces derniers la plus grande possible. On comprend donc qu'un chauffage pour dilater le tube et/ou un refroidissement pour contracter la barre sont notamment envisagés.

Après l'étape 7, le procédé 1 poursuit avec la quatrième étape 13 destinée à solidariser la barre dans le tube puis, la cinquième étape 15 destinée à diminuer la section jusqu'à la section voulue dudit ressort. A titre d'exemple, la section la plus grande représentée par la section extérieure du tube peut ainsi passer de 5 à 100 mm lors de l'étape 5 à une dimension finale comprise entre 10 $\mu$m et 1 mm.

De manière préférée selon !'invention, les étapes 13 et 15 sont réalisées en un processus unique 11 de déformation plastique. Ainsi, la déformation occasionnée permet avantageusement de solidariser la barre et le tube mais également de diminuer la section à celle du futur ressort. De manière préférée, le processus de déformation 11 est du type à froid et/ou à chaud avec, éventuellement des phases intermédiaires de recuit afin d'autoriser la matière à se déformer jusqu'à de très petites dimensions.

A titre d'exemple, les déformations à froid peuvent comporter du tréfilage et/ou de l'étirage et/ou du forgeage et/ou du laminage et/ou du marte!age. De même, à titre d'exemple, les déformations à chaud peuvent comporter de l'étirage et/ou du forgeage et/ou du laminage et/ou du martelage.

Préférentiellement, le processus de déformation 11 comporte également, à la suite de l'étape 15, une sixième étape 17 destinée à donner la forme finale de la section du ressort. Ainsi, dans l'étape 17, la section circulaire de l'ensemble barre - tube est modifiée en une section polygonale, comme, par exemple, une section rectangulaire. Cette étape 17 est préférentiellement effectuée par laminage afin d'obtenir des tolérances dimensionnelles très avantageuses.

Dans une septième étape 21 du procédé 1, on enroule l'ensemble barre - tube afin de former le ressort sensiblement en forme de spirale. Selon l'invention, !'étape 21 peut terminer le procédé 1. Cependant, d'autres variantes en plus de l'étape optionnelle 9 sont possibles.

Ainsi, une seconde étape optionnelle 23 peut être prévue après l'étape 21 afin de lever la spire externe du ressort formé lors de l'étape 21. Une telle étape 23 permet ainsi de former un ressort en spirale du type Breguet. Selon l'invention, l'étape optionnelle 23 peut égaiement terminer le procédé 1.

Cependant, après l'étape 21 ou 23, le procédé 1 peut également se poursuivre avec l'étape 31 et/ou 33. Ainsi, comme illustré à la figure 1 en trait double, après 1"étape 21 ou 23, le procédé 1 peut comporter l'étape 33 destinée à effectuer un traitement thermique dans le but d'ajuster le coefficient thermo-élastique de l'ensemble barre - tube. Selon l'invention, l'étape 33 peut également terminer le procédé 1.

Néanmoins, l'étape 33 peut être remplacée ou précédée par l'étape 31 comme illustré par un trait simple à la figure 1. L'étape 31 est destinée à effectuer un enlèvement de matière au niveau du tube après la formation du ressort c'est-à-dire après l'étape 21 ou 23 afin d'ajuster le coefficient thermo-élastique de l'ensemble barre - tube. L'étape 31 peut par exemple comporter une phase d'usinage et/ou d'attaque chimique. Selon l'invention, on comprend que l'étape 31 peut également terminer le procédé 1,

Bien entendu, la présente invention ne se limite pas à l'exemple illustré mais est susceptible de diverses variantes et modifications qui apparaîtront à l'homme de l'art. Ainsi, notamment d'autres étapes de déformation à chaud et/ou à froid peuvent être envisagées.

**Revendications**

1. Ressort thermocompensé pour balancier - spiral comportant une section comprenant un premier matériau métallique amagnétique **caractérisé en ce que** la section comporte, sur toute la longueur du ressort, une couche externe comportant un deuxième matériau métallique amagnétique dont le coefficient thermo-élastique varie dans le sens opposé à celui du premier.

2. Ressort selon la revendication 1, **caractérisé en ce que** le premier matériau est un acier inoxydable et le deuxième matériau est un alliage FeMn.

**3.** Ressort selon la revendication 1, **caractérisé en ce que** le premier matériau est un alliage FeMn et le deuxième matériau est un acier inoxydable,

**4.** Pièce d'horlogerie **caractérisée en ce qu'**elle comporte au moins un ressort conforme à l'une des revendications précédentes.

**5.** Procédé de fabrication (1) d'un ressort pour une pièce d'horlogerie comportant les étapes suivantes ;

a) former (3) une barre en un premier matériau métallique
b) former (5) un tube en un deuxième matériau métallique
c) enfiler (7) la barre dans le tube ;
d) solidariser (13) la barre dans le tube ;
e) diminuer (15) la section de l'ensemble barre - tube ;
f) enrouler (21) l'ensemble barre - tube afin de former ledit ressort.

**6.** Procédé (1) selon la revendication 5, **caractérisé en ce qu'**il comporte, entre l'étape e) et f), l'étape suivante :

g) modifier (17) la section circulaire de l'ensemble barre - tube en section polygonale,

**7.** Procédé (1) selon la revendication 5 ou 6, **caractérisé en ce qu'**il comporte, après l'étape f), l'étape suivante

h) surélever (23) la spire externe dudit ressort afin de former un ressort du type Breguet

**8.** Procédé (1) selon l'une des revendications 5 à 7, **caractérisé en ce qu'**il comporte l'étape suivantes :

i) effectuer (31) un enlèvement de matière au niveau du tube après la formation (21, 23) du ressort afin d'ajuster le coefficient thermo-élastique de l'ensemble barre - tube.

**9.** Procédé (1) selon l'une des revendications 5 à 8. **caractérisé en ce qu'**il comporte l'étape finale suivante :

j) effectuer (33) un traitement thermique afin d'ajuster le coefficient thermo-élastîque de l'ensemble barre - tube.

**10.** Procédé (1) selon l'une des revendications 5 à 9, **caractérisé en ce qu'**il comporte, entre les étapes b) et c), une étape (9) de traitement thermique de la barre et/ou du tube afin d'augmenter les espaces entre ces derniers dans le but de faciliter ladite étape c).

**11.** Procédé (1) selon l'une des revendications 5 à 10. **caractérisé en ce que** les étapes d) et e) sont réalisées en même temps par un processus (11) de déformation à froid et/ou à chaud.

**12.** Procédé (1) selon l'une des revendications 5 à 11, **caractérisé en ce que** la section externe du tube lors de l'étape b) est comprise entre 5 et 100 mm.

**13.** Procédé (1) selon l'une des revendications 5 à 12, **caractérisé en ce que** la section externe de l'ensemble barre - tube à la fin de l'étape e) est comprise entre 10 $\mu$m et 1 mm.

**14.** Procédé (1) selon l'une des revendications 5 à 13, **caractérisé en ce que** les premier et deuxième matériaux sont amagnétiques et dont les coefficients thermo-élastiques varient en sens opposé.

**15.** Procédé (1) selon la revendication 14, **caractérisé en ce que** les matériaux sont formés respectivement par un acier inoxydable et un alliage FeMn.

Fig. 1

Europäisches
Patentamt

European
Patent Office

Office européen
des brevets

**RAPPORT DE RECHERCHE EUROPEENNE**

Numéro de la demande

EP 09 16 3283

| | **DOCUMENTS CONSIDERES COMME PERTINENTS** | | |
|---|---|---|---|
| Catégorie | Citation du document avec indication, en cas de besoin, des parties pertinentes | Revendication concernée | CLASSEMENT DE LA DEMANDE (IPC) |
| A | US 1 977 458 A (STARGARDTER ALBERT R) 16 octobre 1934 (1934-10-16) * page 1, ligne 1 - page 2, ligne 91 * * revendication 5 * * figures 1,2 * ----- | 1-15 | INV. G04B17/22 F16F1/04 |
| A | WO 2009/068091 A (MANUF ET FABRIQUE DE MONTRES E [CH]; GYGAX PIERRE [CH]; GLASSEY MARC-A) 4 juin 2009 (2009-06-04) * page 1, ligne 3 - page 9, ligne 11 * * figures 1-4 * ----- | 1-15 | |
| A | EP 1 422 436 A (CSEMCT SUISSE D ELECTRONIQUE E [CH] SUISSE ELECTRONIQUE MICROTECH [CH]) 26 mai 2004 (2004-05-26) * alinéas [0001] - [0040] * * figures 1-3 * ----- | 1-15 | |
| A | CH 327 796 A (HORLOGERIE SUISSE S A ASUAG SO [CH]; COMMUNAUTE D INTERETS DES MANU [B]) 15 février 1958 (1958-02-15) * figure 11 * * page 2, ligne 39-42 * ----- | 1,11 | DOMAINES TECHNIQUES RECHERCHES (IPC) G04B G04D F16F |
| D,A | EP 1 039 352 A (ROLEX MONTRES [CH] ROLEX SA [CH]; ROLEX MONTRES [CH]) 27 septembre 2000 (2000-09-27) * alinéas [0001] - [0023] * ----- | 1-15 | |

Le présent rapport a été établi pour toutes les revendications

| Lieu de la recherche | Date d'achèvement de la recherche | Examinateur |
|---|---|---|
| La Haye | 27 octobre 2009 | Burns, Mike |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

7

**ANNEXE AU RAPPORT DE RECHERCHE EUROPEENNE
RELATIF A LA DEMANDE DE BREVET EUROPEEN NO.**

EP 09 16 3283

La présente annexe indique les membres de la famille de brevets relatifs aux documents brevets cités dans le rapport de recherche européenne visé ci-dessus.
Lesdits membres sont contenus au fichier informatique de l'Office européen des brevets à la date du
Les renseignements fournis sont donnés à titre indicatif et n'engagent pas la responsabilité de l'Office européen des brevets.

27-10-2009

| Document brevet cité au rapport de recherche | | Date de publication | Membre(s) de la famille de brevet(s) | | Date de publication |
|---|---|---|---|---|---|
| US 1977458 | A | 16-10-1934 | AUCUN | | |
| WO 2009068091 | A | 04-06-2009 | AUCUN | | |
| EP 1422436 | A | 26-05-2004 | AT | 307990 T | 15-11-2005 |
| | | | AU | 2003271504 A1 | 18-06-2004 |
| | | | WO | 2004048800 A1 | 10-06-2004 |
| | | | CN | 1717552 A | 04-01-2006 |
| | | | DE | 60206939 D1 | 01-12-2005 |
| | | | DE | 60206939 T2 | 27-07-2006 |
| | | | HK | 1067687 A1 | 19-05-2006 |
| | | | JP | 2006507454 T | 02-03-2006 |
| | | | US | 2005281137 A1 | 22-12-2005 |
| CH 327796 | A | 15-02-1958 | AUCUN | | |
| EP 1039352 | A | 27-09-2000 | CN | 1268682 A | 04-10-2000 |
| | | | DE | 69911913 D1 | 13-11-2003 |
| | | | DE | 69911913 T2 | 09-09-2004 |
| | | | HK | 1027636 A1 | 16-04-2004 |
| | | | JP | 2000321371 A | 24-11-2000 |
| | | | JP | 2008145446 A | 26-06-2008 |
| | | | SG | 84578 A1 | 20-11-2001 |
| | | | TW | 430756 B | 21-04-2001 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1039352 A